# EUROPÄISCHE PATENTSCHRIFT

(11) **EP 1 645 394 B1**
(45) Veröffentlichungstag und Bekanntmachung des Hinweises auf die Patenterteilung: **16.07.2008**
(21) Anmeldenummer: 05109237.7
(22) Anmeldetag: 05.10.2005
(51) Int. Cl.: B29C 45/17

(54) **Verfahren zur Herstellung von Formteilen durch gasunterstütztes Spritzgiessen**
Process for manufacturing molded parts with gas-assisted injection
Procédé de fabrication de pièces moulées par injection assistée par gaz

(30) Priorität: 11.10.2004 DE 102004049627
(43) Veröffentlichungstag der Anmeldung: 12.04.2006
(73) Patentinhaber: Adcuram Maschinenbauholding GmbH, 80333 München (DE)
(72) Erfinder: Eckardt, Helmut, 58540, Meinerzhagen (DE)
(74) Vertreter: Gosdin, Michael

(56) Entgegenhaltungen:
- WO-A-02/087844
- US-A- 5 354 523
- PATENT ABSTRACTS OF JAPAN Bd. 017, Nr. 056 (M-1362), 4. Februar 1993 (1993-02-04) -& JP 04 267124 A (TOYODA GOSEI CO LTD), 22. September 1992 (1992-09-22)

## Beschreibung

Die Erfindung betrifft ein Verfahren zur Herstellung von mit Hilfe des Gasinnendruckverfahrens hergestellten Formteilen, das die folgenden Schritte aufweist: a) Einspritzen einer vorgewählten Menge Kunststoff, b) Einspritzen eines Gases mit ausreichendem Druck in die Schmelze, was die Füllung des Formnestes bewirkt, c) Abkühlen des Kunststoffes, d) Entformen des Formteils, sobald es formstabil ist.

Die Herstellung von spritzgegossenen Formteilen mit Gasunterstützung ist seit vielen Jahren bekannt.

Vorteilhaft bei dieser Technik ist, dass gezielt Hohlräume im Formteil erzeugt werden und dort der der Schwindung beim Abkühlen entgegenwirkende Druck durch den Gasdruck aufgebracht wird.

Das gattungsgemäße Verfahren ist beispielsweise in der US 5,354,523, in der WO 02/087844 A1 und in der JP-A 04267124 beschrieben.

Nachteilig bei dieser Technik sind jedoch die langen Kühlzeiten. Das Gas hat nur eine geringe Wärmeleitung und eine geringe Wärmekapazität. Die Kühlwirkung des mit Raumtemperatur eingespritzten Gases ist nur sehr gering.

Um die Kühlzeiten zu verringern, wurde bereits gekühltes Gas eingespritzt. Hierbei gibt es die Möglichkeit, das Gas bereits vor dem Einbringen in das Druckregelventil herunterzukühlen. Nachteilig hierbei ist, dass das Gas bereits beim Durchströmen des Druckventils wieder erwärmt wird.

Eine andere Möglichkeit ist, das Gas erst beim Einspritzen nach Verlassen des Druckventils nach dem Prinzip des Wärmetauschers herunterzukühlen.

Nachteilig bei beiden Methoden ist, dass das am Anfang in das Formnest eintreffende Gas noch warm ist und nicht die eigentlich gewünschten tiefen Temperaturen aufweist. Erst beim Einspritzen eines größeren Gasvolumens gelangt wirklich tiefgekühltes Gas in das Innere des Formnestes. Dieser verfahrensbedingte Nachteil führt dazu, dass nach der Füllung des Formnestes durch das Gas ein größeres Gasvolumen den Hohlraum durchspülen muß, um den gewünschten Kühleffekt zu erzielen. Um dieses Durchströmen mit tiefgekühltem Gas zu erreichen, muß der Formnesthohlraum mindestens zwei Gaseintrittsöffnungen aufweisen. Nachteilig bei beiden Verfahren ist, dass zum Erreichen deutlicher Kühlzeitverkürzungen gegenüber der Einspritzung von Gas mit Raumtemperatur ein Vielfaches des sonst erforderlichen Gasvolumens eingespritzt werden muß.

Ein weiteres Verfahren zur Herstellung von Formteilen mit Hohlräumen, die kürzere Kühlzeiten als Gasinnendruck- Formteile benötigen, ist die Wasserinjektionstechnik. Anstelle vom Gas wird hier Wasser zur Bildung der Hohlräume in das Formnest eingespritzt. Vorteilhaft sind die kürzeren Kühlzeiten durch die Innenkühlung des Hohlraumes mit Wasser. Nachteilig ist jedoch der recht große apparative Aufwand, der zur Einspritzung des Wassers betrieben werden muß. Auch ist die vollständige Entfernung des Wassers aus dem Formteil vor Öffnen des Werkzeuges nicht einfach zu lösen.

Die **Aufgabe** der Erfindung ist es, ein Verfahren zu entwickeln, das die Herstellung von nach dem Gasinnendruckverfahren hergestellten Formteilen bei geringen Kühlzeiten ohne großen apparativen Aufwand ermöglicht.

Die Aufgabe wird durch die Merkmale des Anspruchs 1 gelöst.

Vorteilhafte Weiterbildungen sind in den Unteransprüchen wiedergeben.

Es wird vorgeschlagen, eine Vorrichtung, wie sie für das konventionelle Gasinnendruckverfahren zum Einsatz kommt, zu verwenden. Das Gas, das durch das Druckregelmodul gelangt, wird nicht gekühlt. Auch wird beim Einspritzen des Gases dieses nicht nach dem Prinzip des Wärmetauschers heruntergekühlt.

Kerngedanke der Erfindung ist, dass erst unmittelbar vor der Gaseinspritzung ein die Kühlung bewirkendes Medium in die Gasleitung in unmittelbarer Nähe der Gaseinspritzdüse eingebracht wird. Beim Einspritzen des Gases in die Kavität gelangt das Kühlmedium als erstes in die Schmelze und bewirkt dadurch eine Innenkühlung der Schmelze. Die Kühlwirkung setzt somit sofort mit Einspritzung des Gases in die Schmelze ein.

Ist das Kühlmedium eine Flüssigkeit, z.B. Wasser, dann wird durch die Einspritzung von Gas in das Wasser dieses mit Gas durchsetzt. Durch die hohe Temperatur des Kunststoffes kommt es im Formnest zu einem Verdampfen mindestens eines Teils der Flüssigkeit.

Wird dagegen ein tiefgekühltes Gas, z.B. N₂ oder CO₂ als Kühlmittel verwendet, so wird das Kühlgas durch das eingespritzte Gas, das Raumtemperatur aufweist, in das Formnest eingebracht, wo es eine Innenkühlung der Schmelze bewirkt.

Auch ist es denkbar, N₂ oder CO₂ in flüssiger Form als Kühlmittel in die Gasleitung einzubringen. Hierfür müssen die Druck- und Temperaturbedingungen, die den flüssigen Zustand dieser Gase sicherstellen, erfüllt werden.

Das Kühlmittel, Gas oder Flüssigkeit, wird in seinem Druck gesteuert oder geregelt in die Gasleitung eingebracht und dort kontrolliert. Der Druck wird so gewählt, dass, abhängig vom verwendeten Düsensystem zum Einspritzen des Gases in das Formnest, ein Eindringen des Kühlmittels in die Kavität vor dem Einspritzen der Kunststoffschmelze verhindert wird.

Um die Menge des Kühlmediums zu beeinflussen, hat sich eine Kontrolle des Volumens an eingebrachtem Kühlmedium bewährt.

Es ist auch möglich, zusammen mit dem eingespritzten "warmen" Gas weiteres Kühlmedium in die Schmelze einzuspritzen. Hierdurch kann der Kühleffekt noch verbessert und damit eine noch kürzere Zykluszeit erreicht werden.

Bei der Einspritzung des Gases in Verbindung mit dem Kühlmedium kann es zu einem Zerstäuben des eingespritzten Mediums kommen. Hierdurch wird die Verdampfung des eingespritzten Mediums im Formnest begünstigt. Ferner bewirkt die Durchsetzung des Kühlmediums mit Gas am Ende der Kühlzeit ein schnelles Entfernen des Gas- Kühlmedium- Gemisches aus dem Formnest.

Das erfindungsgemäße Verfahren kann mit allen Verfahrensvarianten der Gasinnendrucktechnik wie z.B. Teilfüllung, vollständige Füllung der Kavität und Schwindungsausgleich durch das Gas, vollständige Füllung der Kavität mit anschließender Verdrängung eines Teils der Schmelze in eine oder mehrere Überlaufkavitäten, Masserückdrückverfahren und anderen verwendet werden.

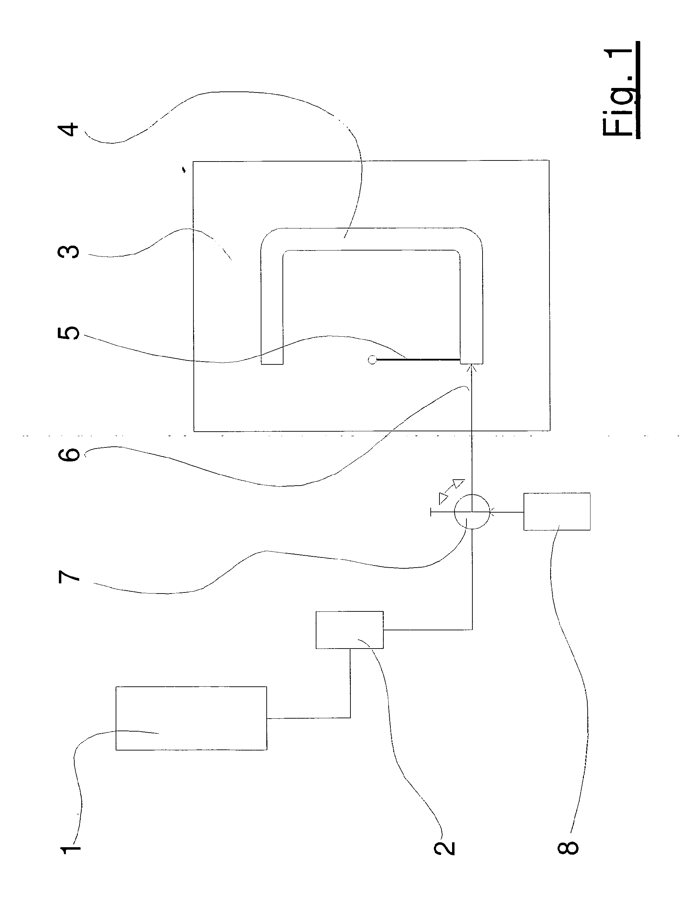

Beispielhaft sind nachfolgend drei Figuren dargestellt. Figur 1 zeigt den schematischen Aufbau einer Vorrichtung zur Durchführung von dem erfindungsgemäßen Verfahren. Das im Druckerzeuger 1 vorherrschende Gas wird dem erfindungsgemäßen Verfahren Druckregelventil 2 zugeführt, von wo aus es dann zum Werkzeug 3 gelangt und an der Gaseinspritzung 6 ins Formteil 4 eingebracht wird. Bevor das Gas in das Werkzeug 3 gelangt passiert es ein Umschaltventil 7, in dem das entsprechende Kühlmedium 8 zugeführt wird. Am Werkzeug 3 ist noch die Stelle zur Kunststoffeinspritzung 5 angedeutet.

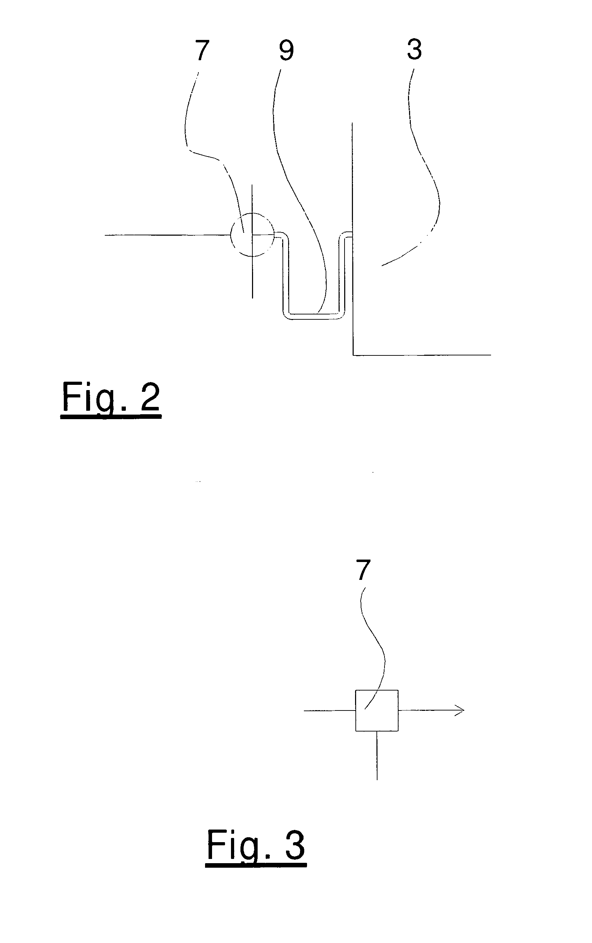

Figur 2 zeigt einen Ausschnitt aus Figur 1, wobei hier das Leitungsstück zwischen dem Umschaltventil 7 und dem Werkzeug 3 dargestellt ist, womit eine besondere Ausbildung der Leitung 9 hervorgehoben werden soll, über die vereinfacht das Kühlmedium in der Leitung vorgelegt werden kann, da schwerkraftbedingt das Kühlmedium in der Leitung verbleibt.

Figur 3 kennzeichnet ein besonderes Umschaltventil, mittels dem die getrennte, aber auch die parallele Eingabe der beiden Medien gewährleistet ist.

### Bezugszeichenliste:

- 1: Druckerzeuger
- 2: Druckregelventil
- 3: Werkzeug
- 4: Formteil
- 5: Kunststoffeinspritzung
- 6: Gaseinspritzung
- 7: Umschaltventil
- 8: Kühlmedium
- 9: Besondere Ausbildung der Leitung

## Patentansprüche

1. Verfahren zur Herstellung von mit Hilfe des Gasinnendruckverfahrens hergestellten Formteilen (4), das die folgenden Schritte aufweist:
a) Einspritzen einer vorgewählten Menge Kunststoff,
b) Einspritzen eines Gases mit ausreichendem Druck in die Schmelze, was die Füllung des Formnestes bewirkt,
c) Abkühlen des Kunststoffes,
d) Entformen des Formteiles (4), sobald es formstabil ist, wobei
unmittelbar vor der Einspritzung des Gases in die Gasleitung zwischen Druckregelventil (2) und der Gaseinspritzung (6) im Formnest ein Kühlmedium (8) möglichst ortsnah der Gaseinspritzung (6) eingebracht wird, **dadurch gekennzeichnet, dass** zumindest zeitweise während der Gaseinspritzung (6) weiteres Kühlmedium (8) dem Gas zugesetzt wird.

2. Verfahren nach Anspruch 1, **dadurch gekennzeichnet, dass** das Kühlmedium (8) Wasser ist.

3. Verfahren nach Anspruch 1, **dadurch gekennzeichnet, dass** das Kühlmedium (8) Stickstoff in flüssigem oder gasförmigem Zustand ist.

4. Verfahren nach Anspruch 1, **dadurch gekennzeichnet, dass** das Kühlmedium (8) Kohlendioxyd in flüssigem oder gasförmigem Zustand ist.

5. Verfahren nach einem der vorherigen Ansprüche, **dadurch gekennzeichnet, dass** der Druck oder das Volumen des Kühlmediums (8) wenigsten zeitweise gesteuert oder geregelt wird.

6. Verfahren nach Anspruch 5, **dadurch gekennzeichnet, dass** das Kühlmedium (8) in flüssigem oder gasförmigem Zustand vor und/oder nach der Einbringung in die Einspritzleitung gehalten wird.

## Claims

1. Method for the production of mouldings (4) using the gas assisted injection moulding method having the following steps:
a) injection of a predetermined amount of plastic material,
b) injection of a gas with sufficient pressure into the melt for causing the filling of the cavity,
c) cooling of the plastic material,
d) demoulding of the moulding (4) as soon as it is inherently stable,
wherein a cooling medium (8) is injected as local as possible to the gas injection (6) immediately before the injection of the gas into the gas conduit between a pressure control valve (2) and the gas injection (6) in the cavity,
**characterized in that**
additional cooling medium (8) is added to the gas at least temporarily during the gas injection.

2. Method according to claim 1, **characterized in that** the cooling medium (8) is water.

3. Method according to claim 1, **characterized in that** the cooling medium (8) is nitrogen in the liquid or gaseous state.

4. Method according to claim 1, **characterized in that** the cooling medium (8) is carbon dioxide in the liquid or gaseous state.

5. Method according to one of the preceding claims, **characterized in that** the pressure or the volume of the cooling medium (8) is controlled or feed-back controlled at least temporarily.

6. Method according to claim 5, **characterized in that** the cooling medium (8) is kept in the liquid or gaseous state before and/or after the injection into the injection conduit.

## Revendications

1. Procédé de fabrication de pièces moulées (4) produites à l'aide du procédé à pression interne de gaz, qui comprend les étapes suivantes:
a) injection d'une quantité présélectionnée de matière synthétique,
b) injection d'un gaz avec une pression suffisante dans le bain fondu, ce qui provoque le remplissage de la cavité de moulage,
c) refroidissement de la matière synthétique,
d) démoulage de la pièce moulée (4), dès que sa forme est stable,
dans lequel on introduit un agent de refroidissement (8) aussi près que possible de l'injection de gaz (6) immédiatement avant l'injection de gaz dans la conduite de gaz entre une soupape de réglage de pression (2) et l'injection de gaz (6) dans la cavité de moulage, **caractérisé en ce que** l'on ajoute au moins temporairement un autre agent de refroidissement (8) au gaz pendant l'injection de gaz (6).

2. Procédé selon la revendication 1, **caractérisé en ce que** l'agent de refroidissement (8) est l'eau.

3. Procédé selon la revendication 1, **caractérisé en ce que** l'agent de refroidissement (8) est l'azote à l'état liquide ou gazeux.

4. Procédé selon la revendication 1, **caractérisé en ce que** l'agent de refroidissement (8) est le dioxyde de carbone à l'état liquide ou gazeux.

5. Procédé selon l'une quelconque des revendications précédentes, **caractérisé en ce que** l'on commande ou l'on règle au moins temporairement la pression ou le volume de l'agent de refroidissement (8).

6. Procédé selon la revendication 5, **caractérisé en ce que** l'on maintient l'agent de refroidissement (8) à l'état liquide ou gazeux avant et/ou après l'introduction dans la conduite d'injection.
